# NEUE EUROPÄISCHE PATENTSCHRIFT

(11) **EP 2 502 030 B2**
(45) Veröffentlichungstag und Bekanntmachung des Hinweises auf die Entscheidung über den Einspruch: **16.12.2015**
(45) Hinweis auf die Patenterteilung: 13.03.2013
(21) Anmeldenummer: 10795602.1
(22) Anmeldetag: 15.11.2010
(51) Int. Cl.: G01D 5/20, G01B 7/00, G01B 3/20, G01B 3/00

(54) **INDUKTIVE MESSEINRICHTUNG FÜR LÄNGEN- UND WINKELERFASSUNG**
INDUCTIVE MEASURING DEVICE FOR DETECTING LENGTHS AND ANGLES
DISPOSITIF DE MESURE INDUCTIF POUR L'ACQUISITION DE LONGUEUR ET D'ANGLE

(30) Priorität: 18.11.2009 AT 18292009
(43) Veröffentlichungstag der Anmeldung: 26.09.2012
(73) Patentinhaber: Vasiloiu, Victor, 5280 Braunau am Inn (AT); Eisschiel, Heinz, 5280 Braunau am Inn (AT)
(72) Erfinder: Vasiloiu, Victor, 5280 Braunau am Inn (AT); Eisschiel, Heinz, 5280 Braunau am Inn (AT)
(74) Vertreter: Patentanwälte Barger, Piso & Partner
(86) Internationale Anmeldenummer: PCT/AT2010/000439
(87) Internationale Veröffentlichungsnummer: WO 2011/060465

(56) Entgegenhaltungen:
- EP-A2- 0 455 613
- EP-A2- 2 034 201
- EP-B1- 1 164 358
- DE-A1- 19 803 249
- US-A- 4 853 604
- US-A- 4 893 077
- US-A- 6 054 851
- US-B2- 6 271 661

## Beschreibung

Die Erfindung bezieht sich auf ein induktiv arbeitendes absolutes Längen- und Winkelmesssystem in dem eine Spulenstruktur und dazu gehörige Auswertelektronik in einem Abtastkopf entlang der Messstrecke sich relativ zu einem absolut codierten Maßstab bewegt und die Position erfasst, entsprechend dem Oberbegriff des Anspruches 1 und der US 6,054,851, entsprechend der weiter unten abgehandelten DE 198 03 249 A1.

Allgemein sind zwei Arten von solchen Einrichtungen für die Positionserfassung bekannt, die Inkrementale Messanordnung in der eine periodische Teilung abgetastet wird und durch das addieren oder subtrahieren von Messinkrementen gegenüber einer Referenzlage die relative Position Maßstab-Abtasteinheit errechnet wird und die absolute Messanordnung in den für jede relative Position Maßstab-Abtasteinheit eine für den ganzen Messbereich einmalige Kombination von in der Abtasteinheit generierten Signalen gewonnen wird.

Es ist offensichtlich, dass eine absolute Messeinrichtung, die beim Einschalten einer Bewegungsachse einer Anlage unmittelbar die Lage erfasst ohne eine Referenzfahrt zu einer bekannten Position ausführen zu müssen, und zusätzlich im Störfall eine weiterhin sichere Bedienung der Anlage ermöglicht, von Vorteil ist

Allgemein sind, durch die einfachere technische Umsetzung, die inkrementalen Messsysteme mehr verbreitet und bieten höhere Auflösungen und Genauigkeiten an. Für beide Massmothoden sind Messeinrichtungen bekannt die auf optischen, magnetischen, kapazitiven oder induktiven physikalischen Prinzipien arbeiten.

Die Erfindung betrifft die induktiv arbeitenden Messsysteme, die gegenüber optischen Systemen wesentlich unempfindlicher gegen externe Umweltfaktoren sind und im Vergleich zu den magnetischen oder kapazitiven Systemen höhere Genauigkeit erreichen können. Aus diesem Grund wird im Folgenden zum Stand der Technik nur diese Variante betrachtet.

In der EP 1 164 358 B1 wird ein hoch genaues induktives inkrementales Messsystem beschrieben in dem eine periodische Teilung von einer kompensierten Spulenstruktur abgetastet wird und Auflösungen im Bereich <1µm erreichen kann. Das Messsystem arbeitet auf inkrementaler Basis und dadurch für die Initialisierung eines Antriebssystems, es ist eine Referenzfahrt benötigt und im Betriebsstörfall seine zuletzt angefahrene Position nach der wieder Inbetriebnahme nicht erkennen kann und aus dem Grund durch unerwünschte Bewegung der Achse es zu Maschinen- und/oder Personenschaden führen kann.

Als Absolutpositionserfassung werden für die Gerätefamilie mit der sich die Erfindung befasst grundsätzlich zwei Methoden angewandt. Der so genannten Nonius-Methode liegt zu Grunde die Erfassung der Phasendifferenz zwischen mindestens zwei entlang der Messtrecke verlaufenden periodischen inkrementalen Teilungen von unterschiedlichen Teilungsperioden. Unter einschränkenden Bedingungen betreffend Auflösung der Positionserfassung und maximal erreichbareren Messbereich kommt eine bestimmte Phasendifferenz nur einmalig vor und dadurch kann jede Phasendifferenz in der elektronischen Auswerteschaltung zu einer bestimmten Absolutposition zugeordnet werden.

Zusätzliche inkrementale Teilungen von weiter unterschiedlichen Perioden oder größer angelegten Perioden können Kompromisse zwischen höherer Auflösung oder größerem Absolutmessbereich ermöglichen.

Aus der DE 69925353 T2 entnimmt man für eine Absolutmesseinrichtung nach dem Nonius-Prinzip mit drei inkremental Teilungen von unterschiedlichen Perioden, dass das erreichbare Verhältnis Teilungsperioden/Messbereich in dem AusfÜhrungsbeispiel Absatz [048] etwa 2,5mm/325mm beträgt, und aus dem Ausführungsbeispiel Absatz [0135] etwa 5mm /2677mm. Dies bedeutet durch die große Teilungsperiode eine erreichbare Auflösung von 10µm für einen Messbereich von nur maximal 2627mm, ist somit sehr begrenzt.

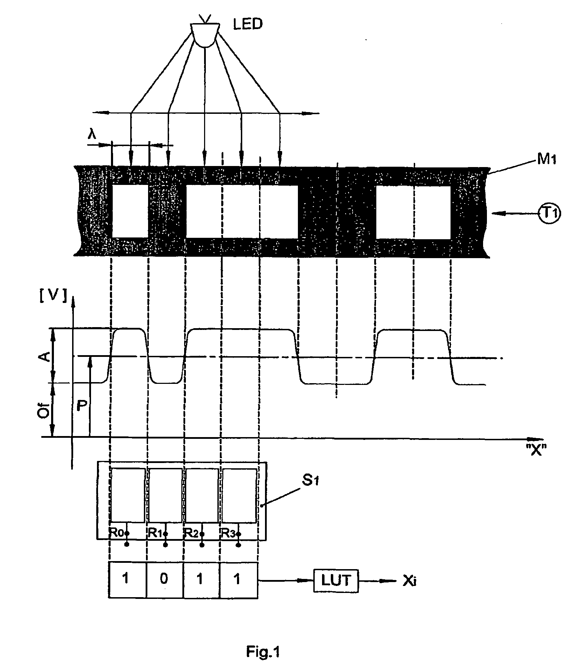

Die zweite bekannte Methode für die Absolutpositionserfassung ist die so genannte "Quasi Random Code" Teilung (Fig. 1) in der eine Teilung (T1) mit abwechselnden Bereichen von unterschiedlichen Längen in Messrichtung als Mehrzahl von einer Teilungsperiode "λ" so gestaltet ist, dass durch das Abtasten von "N" benachbarter Teilungsperioden ein "N"-Bit langes Codewort entsteht, das einmalig für den ganzen Messbereich auftritt und einer bestimmten absoluten Position Xi durch eine Umcodierung in einer "Look Up Table" (LUT) zugeordnet werden kann.

In Fig. 1 ist ein Beispiel aus dem Stand der Technik dargestellt, in dem vier Sensorzellen (Photoelemente) eine codierte Teilung von einer LED im Durchlicht beleuchtet abtasten und dadurch ein vier Bit-Wort für die dargestellte Relativlage gewonnen wird dem nach der Umcodierung in Look Up Tabelle (LUT) eine Längenposition Xi zugeordnet wird. In dieser Messanordnung legen die Signale eine Amplitude "A" weisen einen offset "O" auf und für die logische Signalbildung müssen diese zu einem Pegel "P" ausgewertet werden.

Solche Geräte auf optischem Prinzip arbeitend sind sehr verbreitet und z.B. von der Firma Heidenhain im Prospekt Nr. 571 470-14,-30-06-2007 dargestellt.

Es ist allgemein bekannt, dass die optoelektronischen Geräte anfällig auf Verschmutzung, Kondenswasser oder andere Fremdkörper, die den Lichtstrahl in der Abtastung stören könnten, sind.

In der DE 19803249 A1 wird eine induktive Messeinrichtung mit absoluter Positionserfassung beschrieben, die neben auf Nonius-Methode arbeitende Varianten auch absolut codierte Einrichtungen darstellt. Hier wird im vierten Ausführungsbeispiel, wie in Fig. 21 dargestellt, eine codierte Teilung von einzelnen bitbezogenen Empfänger Wicklungen abgetastet, die von einer einzigen Emitter Wicklung die alle einzelnen Empfänger umrandet (452) für die Signalgenerierung erregt werden. In dieser Sensoranordnung weist die Induktion innerhalb der Fläche der Emitterwicklung einen hohen Gradient auf und dadurch variiert die Amplitude der generierten Signale in den einzelnen bitbezogenen Empfängerwicklungen (457) in Abhängigkeit der Entfernung zu den Emitterwicklungen innerhalb der Emitterfläche sehr stark von Bit zu Bit.

Diese Aspekte werden in der Druckschrift erkannt, aber die genannte vorgeschlagene Lösung, die Emitterwicklungsfläche zu vergrößern, sodass Emitterwicklungen weiter weg von der Empfangerwicklung angeordnet wären, verringert minimal die Ungleichmäßigkeit der Induktion in den einzelnen Empfängerwicklungen, reduziert aber entscheidend die Gesamterregerfeldstärke in der Emitterwicklungsfläche und dadurch den Signalgewinn, sodass die elektrische Auswertung der Signale noch schwieriger wird, vor allem im Falle einer Änderung des Luftspalts zwischen Sensor und Maßstab was für eine industrielle Anwendung praktisch unvermeidbar ist.

Weitere Druckschriften, die aber nur den technologischen Hintergrund beschreiben, sind die im internationalen Recherchebericht genannten DE 198 03 249 A1, EP 2 034 201 A2, US 4 893 077 A, EP 0 455 613 A2 und US 4 853 604 A.

Es ist die Aufgabe der Erfindung, eine induktive, absolut arbeitende Messeinrichtung zu beschreiben, die zuverlässig unter rauen Umgebungsbedingungen und mit hoher Genauigkeit für große Messbereiche Positionsinformationen generiert.

Gemäß der Erfindung werden diese Ziele mit den im kennzeichnenden Teil des Anspruches 1 angeführten Merkmalen erreicht.

Die Erfindung wird im Folgenden anhand der Zeichnung näher erläutert. Dabei zeigt bzw. zeigen:
die Fig. 1 ein Ausführungsbeispiel gemäß dem Stand der Technik,
die Fig. 2 ein erfindungsgemäßes Sensorelement samt codierter Teilung,
die Fig. 3 und 4 Ausgestaltungen des Sensorelementes,
die Fig. 5 ein kompensiertes Sensorelement mit einer codierten Teilung,
die Fig. 6 und 7 weitere Fortbildungen von Sensorelementen,
die Fig. 8 ein Beispiel einer codierten Teilung,
die Fig. 9 den Verlauf der Signale und
die Fig. 10 und 11 zwei Messanordnungen.

Die Festlegung einer binäre Reihenfolge die den ganzen Messbereich der Maßstabscodierung definiert, Codierung die abgetastet auf eine Länge von "N"-Bit einen nicht wiederholbaren Absolutwert liefert, ist Stand der Technik und wird hier nicht weiter erläutert. Ein Beispiel für eine solche Codierung ist unter Bezeichnung T1 in Fig. 1 und folgenden Figuren dargestellt.

Die Teilung des Maßstabs, bestehend aus einem Metallstreifen, in den Ausnehmungen eingearbeitet wurden, bevorzugt durch Photolithographisches oder Elektroerosionsverfahren oder ähnlichen Verfahren die eine höhere Genauigkeit oder Teilung gewährleisten. In Abhängigkeit der ausgewählten Arbeitsparameter der Induktion ist dieses metallische Maßstabsubstrat grumdsätzlich entweder durch eine relativ geringe Reluktanz oder hohe Gleitfähigkeit charakterisiert.

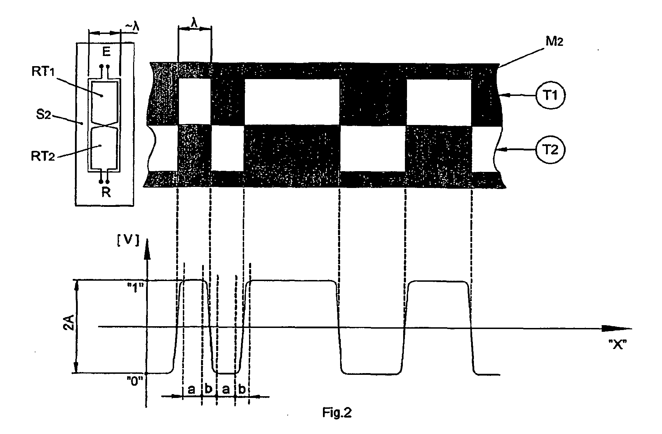

Als Basis für den weiteren Aufbau der Messeinrichtung wird ein Spulenelement für die Abtastung der einzelnen Maßstabbits dargestellt der in sich eigene balancierte Empfänger und Emitter-Wicklungen aufweist und durch die Abtastung eines Maßstabs mit zwei codierten Teilungen (Fig. 2, T1 und T2) die in ihrer Wirkung invertierte Effekte auf dem Sensorelement in der Abtastung hervorrufen, sodass ein annähernd offsetfreies Signal generiert wird.

Das Sensorelement (Fig. 2, S2) hat annähernd die gleiche Breite "λ" eines Bitbereiches der codierten Teilung und besteht aus einer Emitterwicklung "E" die die Sensorelementfläche umschließt und induktiv gekoppelt ist mit einer Empfängerwicklung "R" mit zwei in Feldrichtung entgegengesetzte Sektionen "RT1" und "RT2" wobei jede Sektion eine der zwei codierten Teilungen T1 und T2 abtastet.

In dieser Anordnung bei der Erregung der Emitterwicklung "E" mit einem transienten Signal, zum Beispiel eine Sinuswelle, wird in der Empfängerwicklung in Abhängigkeit der Kopplung jeder Sektion RT1 und RT2 mit den gerade abgetasteten Teilbereichen der codierten Teilung T1 und T2 die für jedes Bit in einer Sektion eine Verstärkung des induzierten Signales und die andere Sektion eine Abschwächung dieses bewirken.

Nach diesem Prinzip durch die Verschiebung des Sensorelementes S2, entlang des Maßstabes M2 wird ein Signal wie in Fig. 2 noch der Demraulation dargestellt generiert. Die Signalbearbeitung, allgemein liegt in der Kenntnisse eines Fachmanns und wird daher hier nicht beschrieben.

Dieses Signal besitzt durch die beschriebene Anordnung eine annähernd doppelte Amplitude 2A als bei der einfachen Abtastung wie in Fig. 1 ausgegeben und ein annähernd "Null" Offset, dass für die weitere elektrische Bearbeitung von großer Bedeutung ist.

Das Sensorelement soll ein möglich hohes Übertragungsverhältnis aufweisen und für größere Luftspalten zwischen Sensor S2 und Maßstab M2 ausreichende Signalstärke generieren. Aus dem Grund, in einer Analogie mit einem Transformator mit bewegten Kern in Abhängigkeit des Arbeitspunktes und Periode "λ" werden die Erregungsfrequenz Anzahl von Windungen in der Erregter (Primär) und Empfängerwicklungen (sekundär) dimensioniert, die Materialeigenschaften der Spulen und Maßstabs und die Abmessungen des Maßstabs.

Das Sensorelement ist in Multilayertechnik erzeugt in dem abwechselnde Metall- und Isolationsschichten durch Leiterbahnstrukturierung und Durchkontaktierungen spiralförmige Planarspulen bilden können.

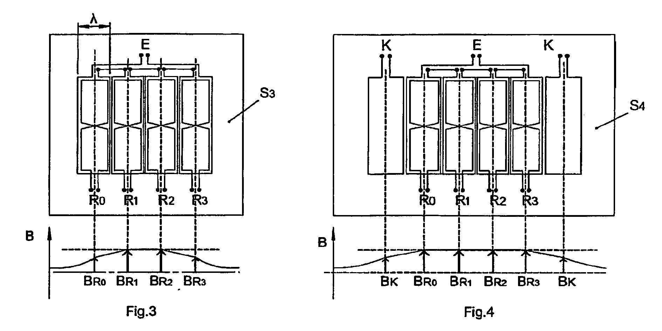

Gemäß der Erfindung werden für die Bildung eines Absolutwortes von N-Bit das durch das Abtasten des codierten Maßstabs entsteht, N gleiche Sensorelemente wie in Fig. 3 dargestellt mit einem Abstand von λ zusammengesetzt. Für die Einfachheit der Beschreibung wurde in Fig. 3 und die weiteren Figuren die Sensorstruktur für nur vier Bit dargestellt.

Durch die Zusammensetzung der Sensorelemente R0, R1, R2 und R3 und die generierten elektromagnetischen Felder der einzelnen Bit bezogenen Emmitoren, in ihren Wechselwirkungen mit den benachbarten Emmitoren werden abgeschwächt oder verstärkt und dementsprechend die Induktionen "B" in den einzelnen Bit bezogenen Empfängerwicklungen dadurch beeinflusst. So wie in dem Diagramm Fig. 3 symbolisch dargestellt sind die Induktionen in den mittleren Sensorelementen BR1 und BR2 unterschiedlich groß im Vergleich mit Induktionen mit den äußeren Sensorelemente BR0 und BR3 und dadurch die generierten Messsignale unterschiedlich in Amplitude.

Zweckmäßig für die elektrische Auswertung sind identische Ausgangssignale für jedes Bit von Vorteil. Gemäß der Erfindung kann diese Gleichmäßigkeit der Erregerfelder in einer Reihe von Sensorelementen erreicht werden in dem zusätzlich Kompensationserregerwicklungen an den inhomogenen Stellen des elektromagnetischen Feldes angeordnet werden.

In Fig. 4 wird ein Beispiel für die Gestaltung einer Sensorstruktur mit Kompensationswicklungen in dem an den äußeren Rändern der Sensorelementenreihe zwei Kompensationswicklungen "K" annähernd gebildet wie die Emmitoren der einzelnen Sensorelemente angeordnet werden und annähernd gleiche elektromagnetische Felder erzeugen wie diese. In dieser Anordnung wie symbolisch dargestellt in dem Diagramm Fig. 4, in Analogie mit dem Diagramm in Fig. 3 haben alle Induktionen BR0, BR1, BR2, BR3 die Nutzsignale in den Empfängern erzeugen die gleiche Stärke und dadurch werden ähnliche Signalaplituden in den Empfängern R0, R1, R2, R3 erreicht.

Es ist im Ermessen des Fachmannes, in Abhängigkeit des Konzeptes der ganzen Sensorstrukturen, die Richtung der einzelnen Induktionen diese Kompensationswicklungen oder möglich auch nur einzelne Kompensationsleiterbahnen so zu gestalten, dass die Induktionen in den einzelnen Sensorelementen annähernd gleich groß wird.

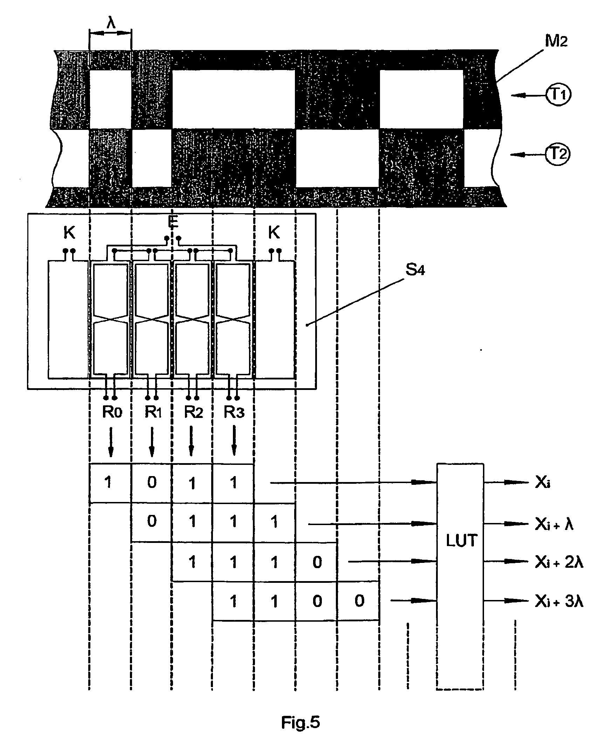

In Fig. 5 wird gemäß der Erfindung eine kompensierte Sensorstruktur S4 in Verbindung mit dem Maßstab "M2" dargestellt

Die vier Sensorelemente (exemplarische Anzahl) generieren synchron durch die Maßstababtastung ein Absolutwert von vier Bit. Durch das Verschieben der Sensorstruktur um eine Periode "λ" entlang des Maßstabes entsteht ein neues Absolutwort und so weiter für den ganzen Messbereich von dem hier nur ein Teil repräsentiert wurde. In der Elektronikauswertung befindet sich eine nicht flüchtig gespeicherte Tabelle (Look Up Tabelle LUT) die jedem Absolutwort eine einzelne, bestimmte Position zuordnet in Abständen von λ zu einander Xi, Xi + X, Xi + 2X,und so weiter.

Wie man aus der Fig. 2 entnehmen kann, wenn sich ein Sensorelement kontinuierlich entlang des Maßstabs bewegt, nimmt das Ausgangssignal entweder wie in den Bereichen "a" feste logische Werte von "0" oder "1" oder hat ein transientes Verhalten wie in Bereichen "b" an den Stellen wo die Codierung am Maßstab den logischen Zustand ändert. In Bereichen von Typ "b" ist die Umwandlung der generierten Analogsignale in festen logischen Pegeln von "0" oder "1" mit Unsicherheiten verbunden und dadurch zu vermeiden.

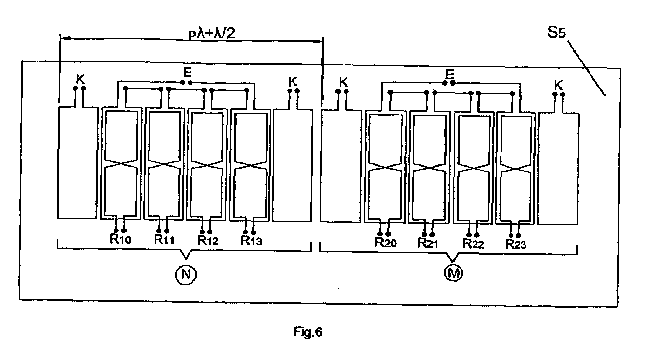

Gemäß der Erfindung, wie in Fig. 6 dargestellt, kann diese Unsicherheit in der Bestimmung des logischen Wertes in den Transientbereichen der relativen Lage Maßstab-Sensorstrukturen behoben werden in dem zusätzlich zu den ersten Sensorstrukturen "N" jedoch eine zweite Sensorstruktur "M", bevorzugt identisch gestaltet wie die erste, jedoch versetzt in Messrichtung um pλ + λ/2 und starr verbunden mit der ersten eingesetzt wird.

Diese zweite Sensorstruktur "M" hat ihre Festwertbereiche von Type "a" genau an den Lagen wo die erste Sensorstruktur "N" ihre Transientbereiche "b" ausweist, sodass für jede relative Position zwischen der Sensoreinheit mit zwei Sensorstrukturen sich in einem fest definiertem Abtastbereich "a" für die Absolutwertbildung befindet und dem Maßstab entweder eine oder die andere Sensorstruktur.

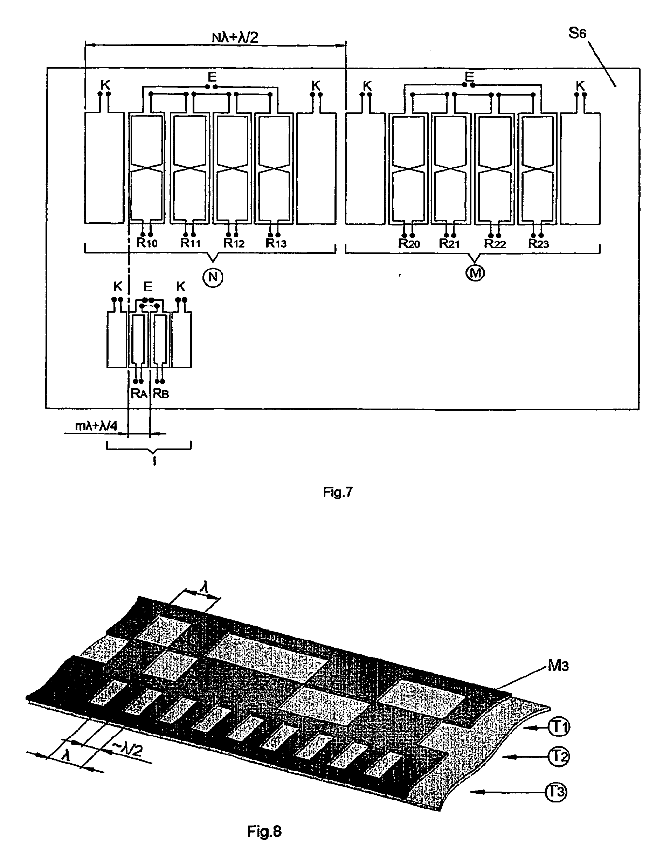

Der Versatz zwischen den Sensorstrukturen wird abgelegt im Speicher der Auswertung, sodass die Zuordnung in der Werttabelle LUT in Abhängigkeit von der Sensorstruktur, die zur Positionswertbildung geführt hat, gebildet wird:
Für die Diskriminierung, welche von den zwei Sensorstrukturen N oder M sich gerade in einem festen Absolutbereich befindet und weiter für die Absolutwertbildung herangezogen wird, wird auf der Sensoreinheit S6 wie in Fig. 7 dargestellt, zusätzlich eine periodische inkrementale Teilung (T3 in Fig. 8) mit Periode λ abgetastet.

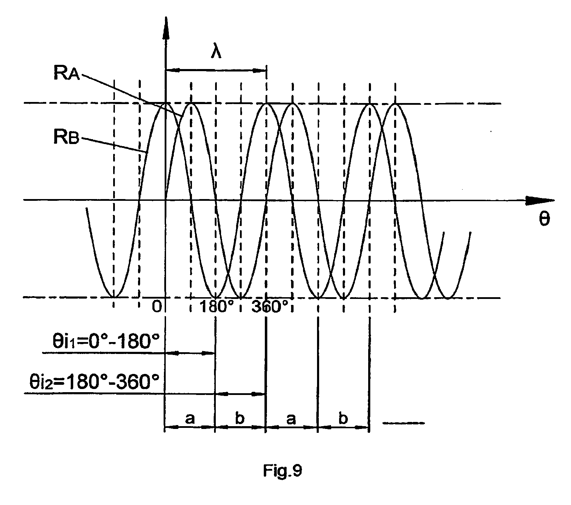

Die induktive Abtastung einer inkrementalen Teilung von zwei um λ/4 phasenverschobene Spulenanordnungen RA und RB für die Bildung von zwei annähernd sinusförmigen Signalen (Fig. 9) ist nicht die Aufgabe der Erfindung und ist ausführlich in EP 1164 358 B1 beschrieben. Exemplarisch wird die inkrementale Sensorstruktur "I" der Sensoreinheit S6 mit ihrem ersten Sensor RA in Phase mit der ersten absoluten Sensorstruktur "N" in Fig. 7 dargestellt.

Unter dieser Voraussetzung können die periodischen Bereiche θi1 = 0° + 180° und θi2 = 180° - 360° des elektrischen Winkels θ, gewonnen aus der inkrementalen Sensorstruktur "I" der Bereiche "a" und "b", der absoluten Abtastung wie in Fig. 9 dargestellt zugeordnet werden. Eine Diskriminierungsfunktion in der logischen elektronischen Schaltung bestimmte in Abhängigkeit des θ-Wertes welche von den zwei Absolut-Sensorstrukturen N oder M den absoluten Positionswert zu erfassen hat.

Es ist weiters Stand der Technik, dass elektronische Schaltungen, zum Beispiel durch Arcustangens-Methode den elektrischen Winkel "θ" im Bereich von etwa 14 Bit hoch interpolieren können

Weiters ist bekannt, eine elektronische Schaltung, die anhand der zwei phasenverschobenen Sinussignale den Absolutwert, gewonnen aus der kodierten Teilung über die Absolut-Sensorstrukturen den inkrementalen Positionswert, gewonnen aus der Inkrementalteilung über den inkrementalen Sensor innerhalb einer Periode "X" durch die θ-Winkelauswertung beifügen. Dieser komplette Positionswert kann über eine serielle Schnittstelle annähernd in Echtzeit ausgegeben werden.

In dieser Sensoreinheit-Anordnung S6 mit kompensierten Spulenelementen und weiter kompensierte Sensorstrukturen in Verbindung mit einem Maßstab Typ M3 (Fig. 8) können, wie nachstehend exemplarisch geschildert, Absolutpositionsmesseinrichtungen gemäß der Erfindung realisiert werden, die hohe Genauigkeiten erreichen und durch die Signalstabilität und geringe Abhängigkeit mit den Abtastabstandsschwankungen und Umwelteinflüssen unter realen industriellen Bedingungen zuverlässig betrieben werden.

Wenn zum Beispiel für eine Messeinrichtung die Teilungsperiode λ = 1 mm ausgewählt wird, den Interpolationsfaktor für den Winkel θ auf 14 Bit realisiert wird und die Anzahl von den Sensorelementen S2 der absoluten Sensorstrukturen N und M auf 16 festlegt, wird eine Messsystemauflösung von A = 1 mm/ 2¹⁴ = 0,00006 mm = 60 Nanometer erreicht für einen maximalen Messbereich ML = 2¹⁶ mm = 65536 mm.

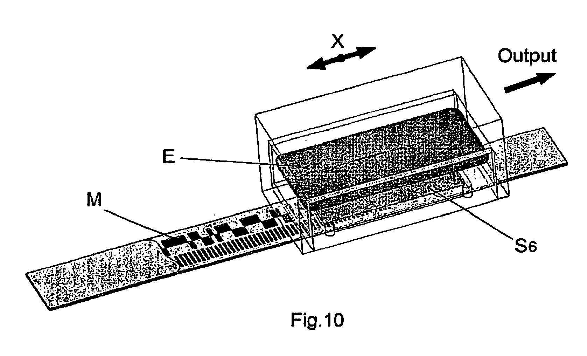

Eine mögliche Gestaltung dieser Messeinrichtung für die Erfassung der absoluten Position "X" in einer linearen Anordnung ist in Fig. 10 dargestellt. Der Maßstab mit seiner absoluten Teilung T1 und T2 und der inkrementalen Teilung T3 ist als dünner, strukturierter Streifen realisiert. Der Messkopf, der sich über dem Maßstab mit einem definierten Luftspalt in Messrichtung "X" bewegen kann, beinhaltet eine Sensoreinheit S6 und eine elektronische Auswerteschaltung E die am Ausgang die Position liefert.

Wenn der Maßstab M und die Sensoreinheit S6 aus einem flexiblen Material realisiert werden, können diese auf einem gleichen, bestimmten Radius gebogen werden.

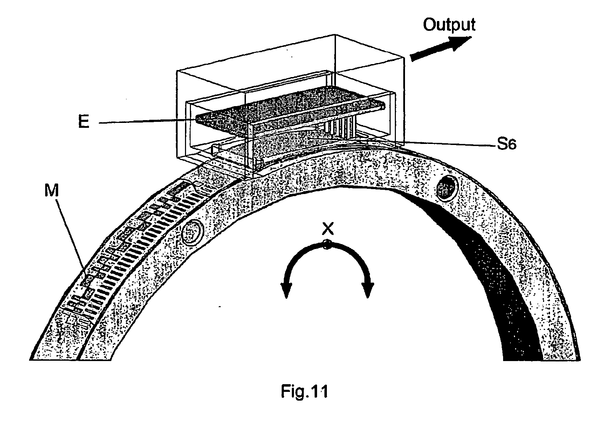

In dieser Ausführung kann die Position X, wie in Fig. 11 dargestellt, als Bogenlänge erfasst werden und die Messeinrichtung kann, gemäß der Erfindung, als Winkelmessgerät mit absoluter Positionsausgabe eingesetzt werden.

Die Erfindung ist nicht auf die dargestellten und beschriebenen Ausführungen beschränkt, sondern kann verschiedentlich abgewandelt werden, insbesondere was die Details der Formen der Sensoreinheiten, deren Tragstruktur, deren Führung, etc., etc. angeht. Die verwendeten Materialien sind die in der Messtechnik üblichen, der Fachmann kann sie in Kenntnis der Erfindung und des Anwendungsgebietes, für den die Messanordnung vorgesehen ist, auswählen.

## Patentansprüche

1. Messeinrichtung für die absolute Positionserfassung, bestehend aus einer Sensoreinheit als planare Spulenstruktur und einem Maßstab mit entlang der Messtrecke abwechselnden Bereichen von variabler Reluktanz oder Leitfähigkeit, wobei für die Bestimmung der Absolutlage innerhalb der Messlänge mindestens zwei aperiodisch, bitweise codierte, parallel verlaufende Teilungen (T1, T2), die für jede Bitbildung entgegengesetzte Auswirkungen auf ein Spulenelement (S2) als Teil der gesamten Sensorstruktur (N) haben, vorgesehen sind, **dadurch gekennzeichnet, dass** die Sensorstruktur zusätzlich zu den Emitterwicklungen (E) des Spulenelements, die notwendig für die Bildung der einzelnen Bits sind, noch andere Emittorenwicklungen oder Leiterbahnen aufweist, die alleine für die Kompensation der elektromagnetischen Felder dienen, um dadurch die Ausgangssignale in Offset oder Amplitude auszugleichen.

2. Messeinrichtung nach Anspruch 1 **dadurch gekennzeichnet, dass** jedes Spulenelement in Offset balanciert ist und für jede Bitabtastung quasi geschlossene Wicklungen für die Emitter- und Receiverspulen (E, R) aufweist, die alleinig nur für eine einzelne bestimmte Bitbildung dienen, und dass diese bevorzugt in einer oder mehreren Windungsausführungen in Multilayertechnik erzeugt werden.

3. Messeinrichtung nach einem der Ansprüche 1 oder 2, **dadurch gekennzeichnet, dass** zusätzlich zu der ersten Sensorstruktur (N), die durch die Abtastung der zwei invertierten absolut codierten Messteilungen den Positionswert erfasst, eine zweite, in Messrichtung zu der ersten phasenversetzt platzierte Sensorstruktur (M) vorgesehen ist, die den absoluten Positionswert erfassen kann in den Abtastbereichen, wo sich, in Messrichtung gesehen, die erste Spulenstruktur in relativer Lage an den Übergangsbereichen der Codierung der Teilungen (T1, T2) befindet.

4. Messeinrichtung nach Anspruch 3, **dadurch gekennzeichnet, dass** eine dritte periodische, inkrementale Teilung parallel zu den absolut codierten Teilungen auf dem Maßstab entlang der Messstrecke aufgebracht wird, und dass durch die Bestimmung der Phasenlage eines aus dieser Teilung gewonnenen Signales die Diskriminierung über die Erfassung des Absolutpositionswert zu der ersten oder zweiten Spulenstruktur durchgeführt wird.

5. Messeinrichtung nach einem der Ansprüche 1 bis 4, **dadurch gekennzeichnet, dass** der Maßstab (M) und die Sensorstrukturen (N, M) auf flexible Substrate aufgebracht werden und zu einer zylindrischen zueinander passenden Form gestaltet werden, sodass durch eine rotierende relative Bewegung zwischen Maßstab und Sensorstrukturen eine absolute Winkelerfassung ermöglicht wird.

6. Messeinrichtung nach einem der Ansprüche 1 bis 5, **dadurch gekennzeichnet, dass** jedes Spulenelement (S2, S3, S4), bestehend aus eigenen Emitter- und Receiverwicklungen (E, R), in Offset balanciert ist, und dass die gesamte Sensorstruktur durch Kompensationswicklungen annähernd gleiche Signalamplituden für jedes einzelne Bit des Absolutwertes an jeder beliebigen Position des codierten Maßstabs liefert.

## Claims

1. Measuring device for detecting absolute positions, consisting of a sensor unit as a planar coil structure and a scale having alternating regions of variable reluctance or conductivity along the measuring line, at least two divisions (T1, T2) are provided for determining the absolute position within the measuring length, which are coded aperiodically and bitwise and which extend parallel to each other, and which have opposite effects on a coil element (S2) as part of the entire sensor structure (N) for each bit formation, **characterised in that** the sensor structure, in addition to the emitter windings (E) of the coil element, which are necessary for the formation of the individual bits, has additional emitter windings or conductors, which individually serve for the compensation of the electromagnetic fields, so as to thus balance the output signals in offset or amplitude.

2. Measuring device according to claim 1, **characterised in that** each coil element is balanced in offset and has, for each bit sample, virtually closed windings for the emitter and receiver coils (E, R), which serve for the formation of only one specific bit formation, and **in that** this is preferably produced in one or more coil designs with the multilayer technique.

3. Measuring device according to claim 1 or 2, **characterised in that**, in addition to the first sensor structure (N), which detects the positional value from the sample of the two inverted, absolutely coded measuring divisions, a second sensor structure is provided in the measuring direction to the first phase-shiftedly located sensor structure (M), which can detect the absolute positional value in the sample regions, where the first coil structure is located in a relative position to the transition region for the coding of the divisions (T1, T2), as seen in the measuring direction.

4. Measuring device according to claim 3, **characterised in that** the a third periodical, incremental division, parallel to the absolutely coded divisions, is applied to the scale along the measuring line, and **in that**, by determining the phasing of a signal emitted from this division, the discrimination is carried out to the first or second coil structure by the detection of the absolute positional value.

5. Measuring device according to one of claims 1 to 4, **characterised in that** the scale (M) and the sensor structures (N, M) are applied to flexible substrates and are shaped into a cylindrical shape which fits one another, such that an absolute detection of angle is enabled by a rotating relative movement between the scale and the sensor structures.

6. Measuring device according to one of claims 1 to 5, **characterised in that** each coil element (S2, S3, S4), consisting of its own emitter and receiver windings (E, R), is balanced in offset, and **in that** the entire sensor structure provides approximately equal signal amplitudes for each individual bit of the absolute value at any position of the coded scale by means of compensation windings.

## Revendications

1. Dispositif de mesure pour la détection de positions absolues, composé d'une unité de détection sous la forme d'une structure de bobine plane et d'une échelle ayant des zones alternées de réluctance ou conductivité variable le long du parcours de mesure qui est prévu, pour la détermination de la position absolue sur la longueur de mesure, au moins deux divisions (T1, T2) apériodiques, à codage binaire, qui s'étendent parallèlement et qui ont, pour chaque formation de bit, des effets opposés sur un élément de bobine (S2) faisant partie de la structure de détection totale (N), **caractérisé en ce que** la structure de détection présente, en plus des enroulements émetteurs (E) de l'élément de bobine qui sont nécessaires à la formation des bits individuels, d'autres enroulements émetteurs ou pistes conductrices qui servent uniquement à la compensation des champs électromagnétiques, pour compenser par ce moyen les signaux de sortie en décalage ou amplitude..

2. Dispositif de mesure selon la revendication 1, **caractérisé en ce que** chaque élément de bobine est équilibré en décalage et présente pour, chaque lecture de bit, des enroulements quasi fermés pour les bobines émettrices et réceptrices (E, R), qui servent uniquement à une formation de bit individuelle déterminée, et que ceux-ci sont produits de préférence en une ou plusieurs exécutions de spires en technique multicouche.

3. Dispositif de mesure selon une des revendications 1 ou 2, **caractérisé en ce qu'**en plus de la première structure de détection (N), qui détecte la valeur de position par la lecture des deux divisions de mesure à codage absolu inversées, une deuxième structure de détection (M), placée en déphasage par rapport à la première dans la direction de mesure, est prévue, qui peut détecter la valeur de position absolue dans les zones de lecture dans lesquelles, vu dans la direction de mesure, la première structure de bobine se trouve en position relative sur les zones de transition du codage des divisions (T1, T2).

4. Dispositif de mesure selon la revendication 3, **caractérisé en ce qu'**une troisième division périodique incrémentale est disposée parallèlement aux divisions à codage absolu sur l'échelle le long du parcours de mesure, et que la discrimination sur la détection de la valeur de position absolue par rapport à la première ou la deuxième structure de bobine est effectuée par la détermination de la position de phase d'un signal obtenu à partir ce cette division.

5. Dispositif de mesure selon une des revendications 1 à 4, **caractérisé en ce que** l'échelle (M) et les structures de détection (N, M) sont appliquées sur des substrats flexibles et arrangées en une forme cylindrique mutuellement adaptée, de façon qu'une détection angulaire absolue soit rendue possible par un mouvement rotatif relatif entre échelle et structures de détection.

6. Dispositif de mesure selon une des revendications 1 à 5, **caractérisé en ce que** chaque élément de bobine (S2, S3, S4), composé de ses propres enroulements émetteurs et récepteurs (E, R), est équilibré en décalage, et que l'ensemble de la structure de détection délivre, grâce à des enroulements de compensation, à peu près les mêmes amplitudes de signal pour chaque bit individuel de la valeur absolue à une position quelconque de l'échelle codée.
